# EUROPÄISCHE PATENTSCHRIFT

(11) **EP 0 336 881 B1**
(45) Veröffentlichungstag und Bekanntmachung des Hinweises auf die Patenterteilung: **24.02.1993**
(21) Anmeldenummer: 89730084.4
(22) Anmeldetag: 31.03.1989
(51) Int. Cl.: B60R 25/02

(54) **Vorrichtung zum Sperren der Lenkung eines Kraftfahrzeugs**
Device for locking the steering of a motor vehicle
Dispositif pour verrouiller la direction d'un véhicule automobile

(30) Priorität: 02.04.1988 DE 3811228
(43) Veröffentlichungstag der Anmeldung: 11.10.1989
(73) Patentinhaber: Oelkers, Dieter, 27607 Langen (DE)
(72) Erfinder: Oelkers, Dieter, 27607 Langen (DE)
(74) Vertreter: Ninnemann, Detlef, Dipl.-Ing.

(56) Entgegenhaltungen:
- FR-A- 503 503
- FR-A- 2 560 837
- US-A- 1 333 581

## Beschreibung

Die Erfindung betrifft eine Vorrichtung zum Sperren der Lenkung eines Kraftfahrzeugs.

Es sind Vorrichtungen zum Blockieren von Kraftfahrzeuglenkungen bekannt, die aus einer die Drehung der Lenksäule sperrenden Lenkungssperre und einem die Lenkungssperre betätigenden Schließzylinder bestehen, der mit einem Lenkschloß verbunden ist, wobei die Lenkungssperre zwischen der mit dem Lenkrad verbundenen Lenkradwelle und der Lenksäule angeordnet ist. Wird ein zum Schließzylinder passender Schlüssel in das Lenkschloß gesteckt und gedreht, so wird die Lenkungssperre aufgehoben und damit die Lenkung frei drehbar. Wird der Schlüssel abgezogen, so ist die Lenkung bei eingerasteter Lenkungssperre blockiert, wobei nach dem Abziehen des Schlüssels die Lenkung gegebenenfalls etwas gedreht werden muß, damit die Lenkungssperre einrastet.

Derartige Konstruktionen sind z.B. aus US-A- 1 333 581 bekannt.

Durch einen Sperrmechanismus kann der Schlüssel nur in der sog. Nullstellung, d.h. in der Parkstellung abgezogen werden. Zum Entrasten der Lenkungssperre ist es häufig notwendig, das Lenkrad etwas zu bewegen, da der Rastmechanismus der Lenkungssperre durch die Rückstellkraft der Lenkung zusätzlich kraftschlüssig blockiert wird.

Ein wesentlicher Nachteil der bekannten Vorrichtungen zum Sperren der Lenkung eines Kraftfahrzeugs besteht darin, daß die Lenkung zum Einrasten und Entriegeln der Lenkungssperre unter zum Teil erheblichem Kraftaufwand gedreht werden muß und daß ein Einrasten nur in einer bestimmten Lenkradstellung, üblicherweise bei eingeschlagenem Lenkrad möglich ist. Der Schlüssel kann bei den bekannten Vorrichtungen somit auch dann abgezogen werden, wenn die Lenkung nicht blockiert ist. Darüberhinaus wird die Lenkung bei mutwillig oder versehentlich abgezogenem Schlüssel in Fahrstellung des Lenkschlosses und in einer Stellung der Lenkung, wo die Lenkungssperre einrastet, blockiert, so daß eine erhebliche Unfallgefahr gegeben ist.

Ein weiterer Nachteil besteht darin, daß die Lenkungssperre im eingerasteten Zustand durch ruckartiges Drehen am Lenkrad zerstört und damit die Lenkung des Kraftfahrzeugs auch bei unbefugter Benutzung freigegeben wird.

Aus der DE-A1-29 30 802 ist eine Vorrichtung zum Sperren der Lenkung eines Kraftfahrzeugs bekannt, die aus einer Lenkwelle besteht, die in zwei in bezug aufeinander frei drehbewegliche Teile geteilt ist. Zusätzlich weist die bekannte Vorrichtung eine die beiden Teile miteinander verbindende Verriegelungsgleithülse und eine Gleithülsenbetätigungseinrichtung auf, die einen Schwenkhebel und dessen Antriebseinrichtung umfaßt.

Die beiden Lenkwellenteile sind an ihren Enden formschlüssig miteinander verbunden, so daß sie gedreht werden können, wenn die Verbindung der beiden Enden durch die Verriegelungsgleithülse aufrechterhalten wird. Durch betätigen eines Schließzylinders wird die Verriegelungsgleithülse so verschoben, daß der eine Teil der frei drehbeweglichen Teile der Lenkwelle ohne Mitnahme des anderen Teils bewegt werden kann. Durch Entriegeln der Gleithülsenbetätigungseinrichtung werden die beiden Teile der geteilten Lenkwelle wieder miteinander verriegelt, so daß die Lenkung des Kraftfahrzeugs wieder funktionsfähig ist.

Der Erfindung liegt die Aufgabe zugrunde, eine Vorrichtung der eingangs genannten Gattung zu schaffen, bei der ein Abziehen des Schlüssels nur im blockierten Zustand der Lenkungssperre möglich ist, die ohne wesentlichen Kraftaufwand einrast- und ohne jeglichen Kraftaufwand eintriegelbar ist, die gegen ein Zerstören der Lenkungssperre gesichert ist und bei der ein Blockieren der Lenkung in Fahrstellung des Lenkschlosses ausgeschlossen wird.

Diese Aufgabe wird mit den kennzeichnenden Merkmalen des Anspruchs 1 gelöst.

Die erfindungsgemäße Lösung gewährleistet, daß der Schlüssel nur in verriegeltem Zustand abgezogen werden kann, so daß gleichzeitig ein Blockieren der Lenkung während der Fahrt durch mutwilliges Abziehen des Schlüssels verhindert wird. Ein Verriegeln und Entriegeln der Lenkungssperre ist ohne Kraftaufwand möglich, wobei das Verriegeln automatisch und ohne Zutun des Fahrers in eine definierte Lenkradstellung erfolgt. Die Vorrichtung ist gegen ein Zerstören der Lenkungssperre durch Drehen des Lenkrades im Sperrzustand der Lenkungssperre gesichert und ermöglicht ein Blockieren der Lenkung in jeder beliebigen Stellung des Lenkrades.

Eine vorteilhafte Weiterbildung der Erfindung ist gekennzeichnet durch eine Rückführeinrichtung, die die Lenkradwelle mit der Lenksäulenbuchse nach einem axialen Verschieben der Schalthülse aus der Parkstellung in die Fahrstellung koppelt. Dadurch wird eine definierte Ausgangsstellung des Lenkrades in der Fahrstellung sichergestellt und jeglicher Kraftaufwand beim Entriegeln der Lenkungssperre vermieden.

Eine vorteilhafte Weiterbildung der Erfindung ist dadurch gekennzeichnet, daß die Kupplung aus mindestens einem auf der Lenkradwelle angeordneten Kupplungsvorsprung und einer der Anzahl der Kupplungsvorsprünge entsprechenden Anzahl Kupplungsnuten in der Lenksäulenbuchse besteht. Vorzugsweise bestehen die Kupplungsvorsprünge aus mehreren, asymmetrisch über den Umfang der Lenkradwelle verteilt angeordneten Kupplungsvorsprüngen, zu denen mehrere der Konfiguration der Kupplungsvorsprünge angepaßte Kupplungsnuten gehören. Durch die asymmetrische Anordnung wird eine vorzugsweise der Geradeausstellung der Lenkung entsprechende Stellung gewährleistet und infolge der mehreren Kupplungsvorsprünge eine hoher Sicherheitsstandard gegeben.

Eine vorteilhafte Weiterbildung der Erfindung ist dadurch gekennzeichnet, daß die Rasteinrichtung mehrere in der Lenkradwelle angeordnete, voneinander beabstandete und quer zur Lenkradwellenachse verlaufende Rastnuten und in der Lenksäulenbuchse angeordnete, in radialer Richtung bewegliche Rastvorsprünge aufweist, die in Abhängigkeit von der Stellung von auf der Innenfläche der Schalthülse angeordneten Rastnocken in die Rastnuten eingreifen. Vorzugsweise bestehen die Rastvorsprünge aus in Bohrungen in der Lenksäulenbuchse angeordneten Kugeln.

Eine vorteilhaft Ausgestaltung dieser Lösung ist dadurch gekennzeichnet, daß sich die Rastnuten über den gesamten Umfang der Lenkradwelle erstrecken und daß die Rastvorsprünge über den gesamten Umfang der Lenksäulenbuchse verteilt angeordnet sind. Insbesondere sind vier Rastnuten und drei Reihen Rastvorsprünge vorgesehen, wobei die Rast vorsprünge in gleichen axialen Abständen zueinander angeordnet sind und die in axialer Richtung jeweils ersten und zweiten Rastnuten sowie die jeweils dritten und vierten Rastnuten und die Rastnocken zueinander den gleichen Abstand aufweisen wie die Rastvorsprünge und wobei die zweite und dritte Rastnut einen geringeren Abstand zueinander aufweisen.

Eine vorteilhafte Weiterbildung der Erfindung ist dadurch gekennzeichnet, daß die Rückführeinrichtung einen durch eine Längsnut der Lenksäulenbuchse ragenden und am Ende der Lenkradwelle anliegenden Rückführstift und eine gegen das Ende der Lenkradwelle drückende Einrückfeder aufweist. Dabei ist der Rückführstift in einer die Lenksäulenbuchse umgebenden Rückführhülse befestigt und zwischen der Rückführhülse und dem Ende der Lenksäulenbuchse eine als Druckfeder ausgebildete, die Lenksäulenbuchse umgebende Rückführfeder angeordnet. Vorzugsweise besteht das im Innern der Lenksäulenbuchse befindliche Ende der Lenkradwelle aus einer nach Art eines Rechtsgewindes mit anschließendem Linksgewinde bestehenden Schräge.

Die erfindungsgemäße Lösung zeichnet sich insbesondere dadurch aus, daß das Blockieren der Lenkung in jeder Lenkradstellung gewähleistet ist und daß es zum Abziehen des Schlüssels erforderlich ist, die Lenkung zu blockieren. Im gesperrten Zustand ist das Lenkrad frei drehbar, so daß ein mutwilliges Zerstören der Lenkungssperre nicht möglicht ist.

Zum Aufheben der Sperre ist keinerlei Kraftaufwand erforderlich und es wird sichergestellt, daß sich die Lenkradstellung von selbst in eine definierte Lage einstellt.

Vorteilhafte Weiterbildungen der Erfindung sind in den Unteransprüchen gekennzeichnet, bzw. werden nachstehend zusammen mit der Beschreibung der bevorzugten Ausführung der Erfindung anhand der Figuren näher dargestellt. Es zeigen:
Figur 1 einen Längsschnitt durch die erfindungsgemäße Vorrichtung zum Blockieren einer Kraftfahrzeuglenkung;
Figur 2 einen Querschnitt durch die Rückführhülse;
Figur 3 eine teilweise geschnittene Darstellung der Lenkradwelle ;
Figur 4 einen Stirnseitenansicht der Lenkradwelle ;
Figur 5 einen Längsschnitt durch die Lenksäulenbuchse ;
Figur 6 einen Querschnitt durch die Lenksäulenbuchse gemäß Figur 5 entlang der Linie A - A;
Figur 7 einen Längsschnitt durch die Schalthülse und
Figur 8 bis 11 eine Querschnitt durch die Rasteinrichtung in verschiedenen Stellungen der Schalthülse.

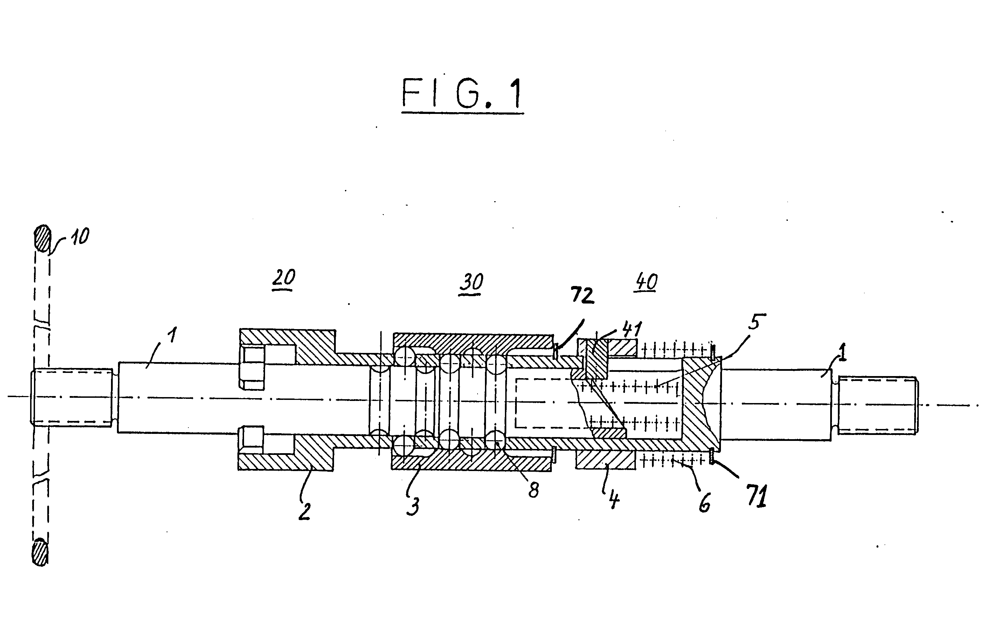

Der in Figur 1 dargestellte Längsschnitt durch die Lenkungssperre zeigt eine mit dem Lenkrad 20 verbundene Lenkradwelle 1, über die zum Teil eine mit der Lenksäule verbunden Lenksäulenbuchse 2 gesteckt ist.

Zwischen der Lenkradwelle 1 und der Lenksäulenbuchse 2 ist eine Kupplung 20 vorgesehen, die im eingerückten Zustand eine formschlüssige Verbindung zwischen Lenkradwelle 1 und Lenksäulenbuchse 2 ermöglicht.

Das Ein- oder Ausrücken der Kupplung 20 erfolgt in Abhängigkeit von der Stellung einer Rasteinrichtung 30, die aus in der Lenksäulenbuche 2 angeordneten Rastvorsprüngen und in der Lenkradwelle 1 angeordneten Rastnuten sowie den Rastnocken einer Schalthülse 3 besteht. Dabei werden die Rastvorsprünge durch axial bewegliche Kugeln 8 gebildet, die in gleichmäßig am Umfang der Lenksäulenbuchse 2 verteilten Bohrungen angeordnet sind und je nach Stellung der Schalthülse in die Rastnuten der Lenkradwelle 1 fallen oder die Bewegung der Schalthülse 3 blockieren.

Eine Rückführeinrichtung 40 dient dazu, die Lenkradstellung nach dem Entriegeln der Lenkungssperre von selbst wieder herzustellen und in Verbindung mit der Rasteinrichtung 30 ein unbeabsichtigtes Sperren der Lenkung zu vermeiden. Die Rückführeinrichtung 40 besteht aus einer auf die Aussenfläche der Lenksäulenbuchse 2 gesteckten Rückführhülse 4, in der ein Rückführstift 41 befestigt ist, der durch eine Nut der Lenksäulenbuchse 2 gesteckt ist und an der innerhalb der Lenksäulenbuchse 2 endenden Stirnfläche der Lenkradwelle 1 anliegt. Diese wird mittels einer Rückführfeder 6 bewirkt, die einerseits an der Rückführhülse 4 und andererseits an einem ersten Seegering 71 anliegt, der an der Lenksäulenbuchse 2 befestigt ist.

Eine im Innern der Lenksäulenbuchse 2 und in eine Hohlbohrung der Lenkradwelle 1 im Bereich der Stirnfläche einge setzte Einrückfeder 5 dient dazu, das Lenkrad nach dem Aufheben der Lenkungssperre in eine definierte Ausgangslage zurückzuführen und zu verhindern, daß die Lenkungssperre versehentlich aktiviert wird. Zur Verringerung der Reibung zwischen der Einrückfeder 5 und der Stirnfläche der Hohlbohrung weist die Einrückfeder 5 an ihrem an der Stirnfläche anliegenden Ende eine Kugel auf.

Ein zweiter Seegering 72, der zwischen der Rückführhülse 4 und der Schalthülse 3 angeordnet ist, dient zur Begrenzung des Schaltweges der Schalthülse 3.

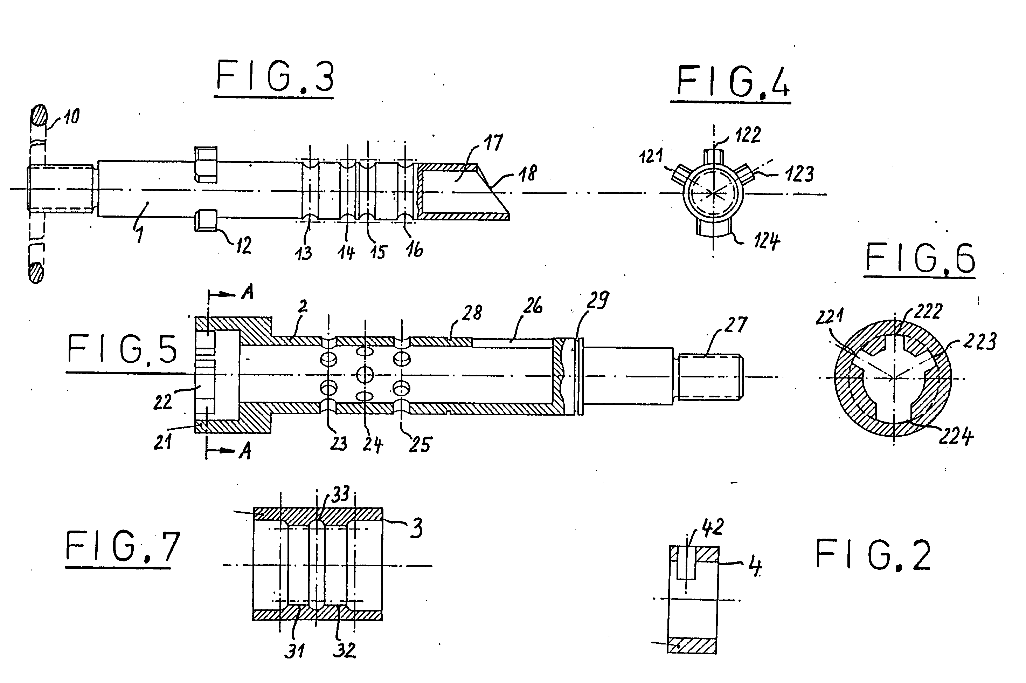

Figur 2 zeigt einen Querschnitt durch die Rückführhülse 4 mit einer darin angeordneten Bohrung 42 zur Aufnahme des Rückführstiftes 41, der mit der Rückführhülse 4 durch eine Schraub-, Press-, Schweiß- oder Lötverbindung verbunden werden kann.

Figur 3 zeigt in einer teilweise geschnittenen Ansicht die Lenkradwelle 1, die an einem Ende mit einem Gewinde 11 zur Aufnahme des Lenkrades 10 versehen ist. Der Kupplungsteil der Lenkradwelle 1 besteht aus mehreren am Umfang der Lenkradwelle 1 verteilt angeordneten Kupplungsvorsprüngen 12, die gemäß Figur 4 aus drei in gleichen Abständen zueinander auf der einen Wellenhälfte angeordneten Zähnen 121, 122, 123 und einem symetrisch dazu auf der anderen Wellenhälfte angeordneten Zahn 124 besteht. Der Zahn 124 ist breiter als die Zähne 121, 122, 123 und weist ebenso wie diese eine Schräge zum Einrasten in den Kupplungsteil der Lenksäulenbuchse 2 auf. Die asymetrische Anordnung der Zähne 121 bis 124 dient dazu, eine bestimmte Lenkradstellung einzuhalten, so daß beispielsweise die Lenkradspeichen bei Geradeausfahrt symmetrisch zur Mittelängsachse angeordnet sind.

Das andere stirnseitige Ende der Lenkradwelle 1 weist eine Hohlbohrung 17 sowie eine schräge Stirnfläche 18 auf, die nach Art eines Rechtsgewindeganges mit anschließenden Linksgewindegang ausgebildet ist. Diese Konfiguration dient dazu, in Verbindung mit dem Rückführstift 41 und der Einrückfeder 5 nach dem Entriegeln der Lenkungssperre das Lenkrad automatisch in eine definierte Stellung zurückzubewegen.

Zwischen dem stirnseitigen Ende 18 der Lenkradwelle 1 und den Kupplungsvorsprüngen 12 sind vier Rastnuten 13, 14, 15, 16 vorgesehen, die über den gesamten Umfang der Lenkradwelle 1 verlaufen. Jeweils zwei aneinandergrenzende Rastnuten 13, 14, bzw. 15, 16 sind im gleichen Abstand zueinander angeordnet, während die zweite und dritte Rastnut 14, 15 einen geringeren Abstand zueinander aufweisen.

Figur 5 zeigt stellungsmäßig mit der Lenkradwelle 1 fluchtend einen Längsschnitt durch die Lenksäulenbuchse 2, deren Kupplungsteil 21 einen vergrößerten Durchmesser und mehrere verteilt angeordnete Rastnuten 22 aufweist. Wie dem in Figur 6 dargestellten Schnitt entlang der Linie A-A zu entnehmen ist, weisen die Kupplungsnuten 221 bis 224 die gleiche Konfiguration auf wie die Kupplungsvorsprünge 12 der Lenkradwelle 1. Im eingerückten Zustand, d.h. in der Fahrstellung greifen die Kupplungsvorsprünge 121 bis 124 in die Kupplungsnuten 221 bis 224 ein und bewirken eine formschlüssige Verbindung zwischen Lenkradwelle 1 und Lenksäulenbuchse 2 und damit zwischen dem Lenkrad 10 und der Lenksäule.

Im Anschluß an das Kupplungsteil 21 der Lenksäulenbuchse 2 sind quer zur Längsachse der Lenksäulenbuchse 2 im gleichen Abstand zueinander drei Reihen Bohrungen 23, 24, 25 vorgesehen, die zur Aufnahme der Kugeln 8 gemäß Figur 1 dienen, die radial beweglich in den Bohrungen 23, 24, 25 gelagert sind.

Zwischen den Bohrungen 23, 24, 25 und dem Gewindeteil 27 der Lenksäulenbuchse 2 zur Aufnahme der Lenksäule sind eine Nut 28 zur Aufnahme des zweiten Seegeringes 72, die Nut 26, in der der Rückführstift 41 gleitet und eine weitere Nut 29 zur Aufnahme des ersten Seegeringes 71 vorgesehen.

Figur 7 zeigt einen Längsschnitt durch die Schalthülse 3, in der zwei Rastnocken 31, 32 angeordnet sind, deren Abstände zueinander dem Abstand zwischen den Bohrungsreihen 23, 24 bzw. 24, 25 der Lenksäulenbuchse 2 gleichen.

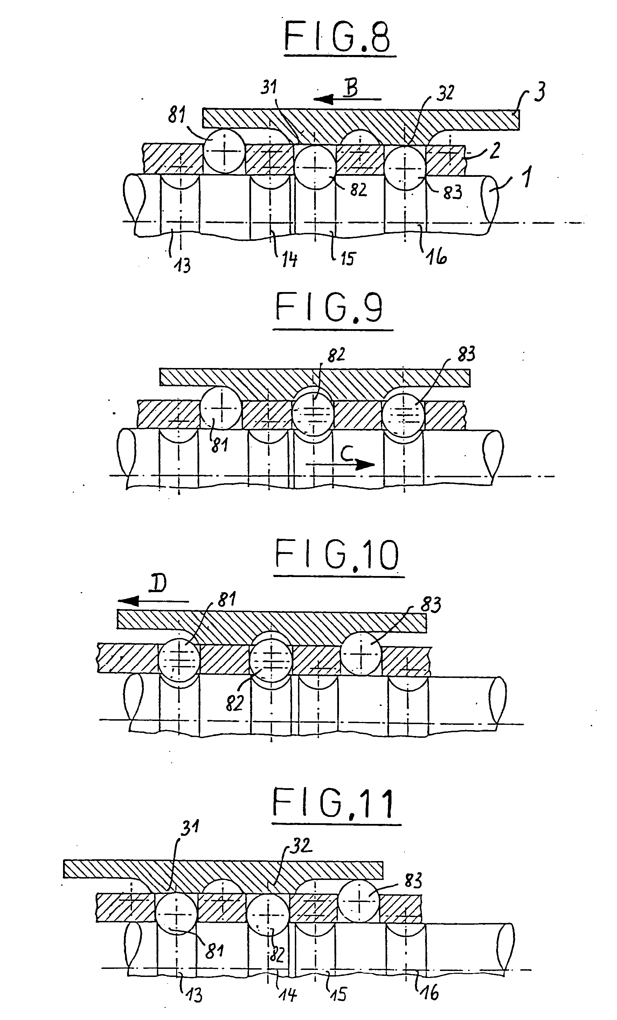

Anhand der Darstellung gemäß den Figuren 8 bis 11 soll die Funktionsweise der erfindungsgemäßen Vorrichtung näher erläutert werden.

Figur 8 zeigt in vergrößerter Darstellung die Schalthülse 3 mit den Schaltnocken 31, 32, drei in den Bohrungen der Lenksäulenbuchse 2 axial beweglich angeordnete Kugeln 81, 82, 83 sowie Ausschnitte aus den vier Rastnuten 13, 14, 15, 16 der Lenkradwelle 1.

Figur 8 zeigt die sogenannte Fahrstellung, in der die Lenkradwelle 1 und die Lenksäulenbuchse 2 über die asymmetrisch angeordneten Zähne der Kupplung kraftschlüssig mit einander verbunden sind. Da die Kugeln 82, 83 durch die Rastnocken 31, 32 der Schalthülse 3 abgedeckt sind, kann die Lenkradwelle 1 nicht gegen die Federkraft der Einrückfeder 5 aus der formschlüssigen Kupplungsverbindung ausgerückt werden.

Das Sperren der Lenkungssperre wird dadurch eingeleitet, daß die Schalthülse 3 in Richtung des Pfeiles B gemäß Figur 8 soweit bewegt wird, daß sie in ihrer weiteren Bewegung durch das Anstoßen der Schaltnocke 31 an der Kugel 81 gehindert wird. In dieser Stellung werden die Kugeln 82, 83 freigegeben.

Da die Kugel 81 den weiteren Sperrvorgang verhindert, muß zunächst die Lenkradwelle 1 in Pfeilrichtung C gemäß Figur 9 bewegt werden. Diese erfoglt durch Eindrücken des Lenkrades, so daß die Kugel 81 in die Rastnut 13 gleiten kann. Gleichzeitig wird die Rastnut 14 für die zweite Kugel 82 freigegeben, so daß gemäß Figur 10 die erste und zweite Kugel 81, 82 in den Rastnuten 13, 14 angeordnet sind, während die dritte Kugel 83 zwischen den Rastnuten 15, 16 auf der Oberfläche der Lenkradwelle 1 liegt. In dieser Stellung ist der Formschluß zwischen der Lenkradwelle 1 und der Lenksäulenbuchse 2 aufgehoben.

Anschließend kann die Schalthülse 3 in die Endstellung oder Parkstellung gemäß Figur 11 bewegt werden, wo die Rastnocken 31, 32 die erste und zweite Kugel 81, 82 abdecken. In dieser Stellung sind die Lenkradwelle 1 und die Lenksäulenbuchse 2 gegeneinander gesichert aber frei drehbar.

Zum Ausrücken der Kupplung zwischen der Lenkradwelle 1 und der Lenksäulenbuchse 2 muß durch das Eindrücken der Lenkradwelle 1 die Einrückfeder 5 gemäß Figur 1 gespannt werden. In diesem gespannten Zustand verbleibt die Einrückfeder 5 bis zum Entriegeln der Lenkungssperre.

Das Entriegeln der Lenkungssperre erfolgt in umgekehrter Reihenfolge wie zuvor an Hand der Figuren 8 bis 11 beschrieben. Dabei dient die Rückführeinrichtung 40 gemäß Figur 1 dazu, die Zähne 121 bis 124 des Kupplungsteils 12 der Lenkradwelle 1 in Gegenüberstellung zu den Kupplungsnuten 221 bis 224 der Lenksäulenbuchse 2 beim Einrückvorgang zu bringen. Der Rückführstift 41 in Verbindung mit der schraubenartigen Stirnseite der Lenkradwelle 1 und der Rückführfeder 6 dienen dazu, die Lenkradwelle 1 in die passende Stellung zu bringen, während die Einrückfeder 5 das automatische Einrasten der asymmetrischen Zähne 121 bis 124 des Kupplungsteils 12 der Lenkradwelle 1 in den Kupplungsteil 21 der Lenksäulenbuchse 2 bewirkt.

Selbstverständlich kann der zuvorstehend beschriebene Aus- und Einrückvorgang der Lenkradwelle 1 und der Lenksäulenbuchse 2 sowie die Bewegung der Schalthülse 3 in anderer Weise erfolgen, so daß beispielsweise bei sinngemäßer Anwendung der erfindungsgemäßen Lösung ein Verriegeln der Lenkungssperre durch Anziehen des Lenkrades oder ein Aufheben der Lenkungssperre durch Anziehen oder Eindrücken des Lenkrades erfolgt.

Die Erfindung beschränkt sich in ihrer Ausführung nicht auf das vorstehend angegebene bevorzugte Ausführungsbeispiel. Vielmehr ist eine Anzahl von Varianten denkbar, gemäß dem Gegenstand der beigefügten Ansprüche.

## Patentansprüche

1. Vorrichtung zum Sperren der Lenkung eines Kraftfahrzeugs mit einer zwischen der mit dem Lenkrad (10) verbundenen Lenkradwelle (1) und der Lenksäule angeordneten und über ein Lenkschloß betätigbaren Lenkungssperre, wobei die Lenksäule mit einer die Lenkradwelle (1) mindestens teilweise umgebenden Lenksäulenbuchse (2) verbunden ist, gegenüber der die Lenkradwelle (1) axial verschiebbar ist, wobei die Lenkradwelle (1) und die Lenksäulenbuchse (2) mittels einer Kupplung (12, 22) formschlüssig miteinander verbindbar sind und wobei zwischen der Lenksäulenbuchse (2) und der Lenkradwelle (1) eine Rasteinrichtung (8; 13 bis 16; 23 bis 25) angeordnet ist, die von einer mit dem Lenkschloß verbundenen, die Lenksäulenbuchse (2) teilweise umgebenden und auf der Lenksäulenbuchse (2) axial verschiebbaren Schalthülse (3) zum lösbaren Verrasten der Lenksäulenbuchse (2) mit der Lenkradwelle (1) in einer Fahrstellung und mindestens einer Parkstellung betätigbar ist.

2. Vorrichtung nach Anspruch 1, **gekennzeichnet durch** eine Rückführeinrichtung (4, 5, 6), die die Lenkradwelle (1) mit der Lenksäulenbuchse (2) nach einem axialen Verschieben der Schalthülse (3) aus der Parkstellung in die Fahrstellung koppelt.

3. Vorrichtung nach einem der vorangehenden Ansprüche, **dadurch gekennzeichnet,** daß die Kupplung (12, 22) aus mindestens einem auf der Lenkradwelle (1) angeordneten Kupplungsvorsprung (12) und einer der Anzahl der Kupplungsvorsprünge (12) entsprechenden Anzahl Kupplungsnuten (22) in der Lenksäulenbuchse (2) besteht.

4. Vorrichtung nach Anspruch 3, **gekennzeichnet durch** mehrere, asymmetrisch über den Umfang der Lenkradwelle (1) verteilt angeordnete Kupplungsvorsprünge (12) und mehrere der Konfiguration der Kupplungsvorsprünge (12) angepaßte Kupplungsnuten (22).

5. Vorrichtung nach Anspruch 4, **gekennzeichnet durch** drei erste, auf der einen Umfangshälfte der Lenkradwelle (1) angeordnete Kupplungsvorsprünge (121, 122, 123) und einen zweiten, auf der anderen Umfangshälfte angeordneten Kupplungsvorsprung (124), wobei der zweite Kupplungsvorsprung (124) in radialer Richtung breiter als die ersten Kupplungsvorsprünge (121, 122, 123) ist.

6. Vorrichtung nach einem der vorangehenden Ansprüche 3 bis 5, **dadurch gekennzeichnet,** daß die Vorderflanken der Kupplungsvorsprünge (12) angeschrägt sind.

7. Vorrichtung nach einem der vorangehenden Ansprüche, **dadurch gekennzeichnet,** daß die Rasteinrichtung (8; 13 bis 16; 23 bis 25) mehrere in der Lenkradwelle (1) angeordnete, voneinander beabstandete und quer zur Lenkradwellenachse verlaufende Rastnuten (13 bis 16) und in der Lenksäulenbuchse (2) angeordnete, in radialer Richtung bewegliche Rastvorsprünge (8; 23 bis 25) aufweist, die in Abhängigkeit von der Stellung von auf der Innenfläche der Schalthülse (3) angeordneten Rastnocken (31, 32) in die Rastnuten (13 bis 16) eingreifen.

8. Vorrichtung nach Anspruch 7, **dadurch gekennzeichnet,** daß die Rastvorsprünge (8; 23 bis 25) aus in Bohrungen (23, 24, 25) in der Lenksäulenbuchse (2) angeordneten Kugeln (8) bestehen.

9. Vorrichtung nach Anspruch 7, **dadurch gekennzeichnet,** daß sich die Rastnuten (13 bis 16) über den gesamten Umfang der Lenkradwelle (1) erstrekken und daß die Rastvorsprünge (8; 23 bis 25) über den gesamten Umfang der Lenksäulenbuchse (2) verteilt angeordnet sind.

10. Vorrichtung nach Anspruch 9, **dadurch gekennzeichnet,** daß vier Rastnuten (13 bis 16) und drei Reihen Rastvorsprünge (8; 23 bis 25) vorgesehen sind, wobei die Rastvorsprünge (8; 23 bis 25) in gleichen axialen Abständen zueinander angeordnet sind, daß die in axialer Richtung jeweils ersten und zweiten Rastnuten (13, 14) sowie die jeweils dritten und vierten Rastnuten (15, 16) und die Rastnocken (31, 32) zueinander den gleichen Abstand aufweisen wie die Rastvorsprünge (8; 23 bis 25) und daß die zweite und dritte Rastnut (14, 15) einen geringeren Abstand zueinander aufweisen.

11. Vorrichtung nach einem der vorangehenden Ansprüche, **dadurch gekennzeichnet,** daß die Rückführeinrichtung (4, 5, 6) einen durch eine Längsnut (26) der Lenksäulenbuchse (2) ragenden und am Ende der Lenkradwelle (1) anliegenden Rückführstift (40) und eine gegen das Ende der Lenkradwelle (1) drückende Einrückfeder (5) aufweist.

12. Vorrichtung nach Anspruch 11, **dadurch gekennzeichnet,** daß der Rückführstift (40) in einer die Lenksäulenbuchse (2) umgebenden Rückführhülse (4) befestigt ist und daß zwischen der Rückführhülse (4) und dem Ende der Lenksäulenbuchse (2) eine als Druckfeder ausgebildete, die Lenksäulenbuchse (2) umgebende Rückführfeder (6) angeordnet ist.

13. Vorrichtung nach einem der vorangehenden Ansprüche, **dadurch gekennzeichnet,** daß das im Innern der Lenksäulenbuchse (2) befindliche Ende der Lenkradwelle (1) aus einer nach Art eines Rechtsgewindes mit anschließendem Linksgewinde bestehenden Schräge (18) besteht.

14. Vorrichtung nach einem der vorangehenden Ansprüche, **dadurch gekennzeichnet,** daß das Ende der Lenkradwelle (1) eine Hohlbohrung aufweist, in der die Einrückfeder (5) gelagert ist, die am Ende der Lenksäulenbuchse (2) abgestützt ist.

15. Vorrichtung nach Anspruch 14, **dadurch gekennzeichnet,** daß die Einrückfeder (5) an dem an der Stirnseite der Hohlbohrung (17) anliegenden Ende mit einer Kugel versehen ist.

16. Vorrichtung nach einem der vorangehenden Ansprüche, **gekennzeichnet durch** einen auf der Aussenfläche der Lenksäulenbuchse (2) und an deren Ende vorgesehenen ersten Vorsprung (71) zum Fixieren der Rückführfeder (6) und einem zwischen der Rückführeinrichtung (4, 5, 6) und der Rasteinrichtung (8; 13 bis 16; 23 bis 25) vorgesehenen zweiten Vorsprung (72) zum Begrenzen der axialen Bewegung der Schalthülse (3).

17. Vorrichtung nach Anspruch 16, **dadurch gekennzeichnet,** daß der erste und zweite Vorsprung (71, 72) aus jeweils einem in einer Nut (28, 29) in der Außenfläche der Lenksäulenbuchse (2) angeordneten Seegering besteht.

## Claims

1. A device for blocking the steering of a motor vehicle with a steering blocking means which is located between the steering wheel shaft (1) connected to the steering wheel (10) and the steering column, and which can be actuated by means of a steering column lock, the steering column being connected to a steering column bushing (2) which at least partially surrounds the steering wheel shaft (1), being axially displaceable relative to the steering wheel shaft (1), the steering wheel shaft (1) and the steering column bushing (2) being able to be connected together positively by means of a coupling (12, 22) and with a locking means (8; 13 to 16; 23 to 25) being located between the steering column bushing (2) and the steering wheel shaft (1), which means can be actuated by a connecting bush (3), which is connected to the steering column lock, partially surrounds the steering column bushing (2) and is axially displaceable on the steering column bushing (2), for the detachable locking of the steering column bushing (2) with the steering wheel shaft (1) in a driving position and at least one parking position.

2. A device according to Claim 1, characterised by a restoring means (4, 5, 6) which couples the steering wheel shaft (1) with the steering column bushing (2) after axial displacement of the connecting bush (3) from the parking position into the driving position.

3. A device according to one of the preceding Claims, characterised in that the coupling (12, 22) consists of at least one coupling projection (12) located on the steering wheel shaft (1) and a number of coupling grooves (22) in the steering column bushing (2) which corresponds to the number of coupling projections (12).

4. A device according to Claim 3, characterised by a plurality of coupling projections (12) distributed asymmetrically over the periphery of the steering wheel shaft (1) and a plurality of coupling grooves (22) adapted to the configuration of the coupling projections (12).

5. A device according to Claim 4, characterised by three first coupling projections (121, 122, 123) arranged on one half of the periphery of the steering wheel shaft (1) and a second coupling projection (124) arranged on the other half of the periphery, the second coupling projection (124) being wider in the radial direction than the first coupling projections (121, 122, 123).

6. A device according to one of the preceding Claims 3 to 5, characterised in that the front flanks of the coupling projections (12) are bevelled.

7. A device according to one of the preceding Claims, characterised in that the locking means (8; 13 to 16; 23 to 25) has a plurality of spaced-apart locking grooves (13 to 16) which are located in the steering wheel shaft (1) and run transversely to the steering wheel shaft axis, and locking projections (8; 23 to 25) located in the steering column bushing (2) which are moveable in the radial direction, which engage in the locking grooves (13 to 16) dependent on the position of locking cams (31, 32) located on the inner surface of the connecting bush (3).

8. A device according to Claim 7, characterised in that the locking projections (8; 23 to 25) consist of spheres (8) located in bores (23, 24, 25) in the steering column bushing (2).

9. A device according to Claim 7, characterised in that the locking grooves (13 to 16) extend over the entire periphery of the steering wheel shaft (1) and that the locking projections (8; 23 to 25) are distributed over the entire periphery of the steering column bushing (2).

10. A device according to Claim 9, characterised in that four locking grooves (13 to 16) and three rows of locking projections (8; 23 to 25) are provided, the locking projections (8; 23 to 25) being arranged at identical axial distances from one another, that the first and second locking grooves (13, 14) in the axial direction in each case and the third and four locking grooves (15, 16) in each case and the locking cams (31, 32) have the same distance from each other as the locking projections (8; 23 to 25) and that the second and third locking groove (14, 15) have a lesser distance from one another.

11. A device according to one of the preceding Claims, characterised in that the restoring means (4, 5, 6) has a restoring pin (40) which protrudes through a longitudinal groove (26) in the steering column bushing (2) and bears on the end of the steering wheel shaft (1) and an engaging spring (5) which presses against the end of the steering wheel shaft (1).

12. A device according to Claim 11, characterised in that the restoring pin (40) is fastened in a restoring sleeve (4) surrounding the steering column bushing (2) and that a restoring spring (6) which is designed as a pressure spring and surrounds the steering column bushing (2) is located between the restoring sleeve (4) and the end of the steering column bushing (2).

13. A device according to one of the preceding Claims, characterised in that the end of the steering wheel shaft (1) which is located in the interior of the steering column bushing (2) consists of a bevel (18) made in the manner of a right-hand thread with a subsequent left-hand thread.

14. A device according to one of the preceding Claims, characterised in that the end of the steering wheel shaft (1) has a hollow bore in which the engaging spring (5) is mounted, which is supported on the end of the steering column bushing (2).

15. A device according to Claim 14, characterised in that the engaging spring (5) is provided with a sphere on the end which bears on the end face of the hollow bore (17).

16. A device according to one of the preceding Claims, characterised by a first projection (71), provided on the outer surface of the steering column bushing (2) and on the end thereof, for fixing the restoring spring (6) and a second projection (72), provided between the restoring means (4, 5, 6) and the locking means (8; 13 to 16; 23 to 25), for limiting the axial movement of the connecting bush (3).

17. A device according to Claim 16, characterised in that the first and second projection (71, 72) each consist of a Seeger circlip ring located in a groove (28, 29) in the outer surface of the steering column bushing (2).

## Revendications

1. Dispositif de blocage de la direction d'un véhicule automobile comprenant un blocage de direction agencé entre l'arbre (1) relié au volant (10) et la colonne de direction et actionnable par l'intermédiaire d'une serrure, la colonne de direction étant reliée à une douille de colonne de direction (2) qui entoure au moins partiellement l'arbre (1) du volant et par rapport à laquelle l'arbre (1) du volant est déplaçable axialement, dans lequel l'arbre (1) du volant et la douille de colonne de direction (2) peuvent être mutuellement reliés par une liaison due à la forme au moyen d'un couplage (12, 22) et dans lequel, entre la douille de colonne de direction (2) et l'arbre (1) du volant est agencé un dispositif d'encliquetage (8 ; 13 à 16 ; 23 à 25) qui peut être actionné par un manchon de commande (3) qui est relié à la serrure, entoure partiellement la douille de colonne de direction (2), est capable de coulisser axialement sur la douille de colonne de direction (2) et est destiné à réaliser un encliquetage détachable entre la douille de colonne de direction (2) et l'arbre (1) du volant dans une position de marche et au moins une position de parcage.

2. Dispositif suivant la revendication 1, caractérisé par un dispositif de retour (4, 5, 6) qui, après un déplacement axial du manchon de commande (3) hors de la position de parcage dans la position de marche, couple l'arbre (1) du volant à la douille de colonne de direction (2).

3. Dispositif suivant l'une des revendications précédentes, caractérisé en ce que le couplage (12, 22) est constitué d'au moins une saillie de couplage (12) agencée sur l'arbre (1) du volant et d'un nombre de rainures de couplage (22) dans la douille de colonne de direction (2) qui correspond au nombre des saillies de couplage (12).

4. Dispositif suivant la revendication 3, caractérisé par plusieurs saillies de couplage (12) agencées de manière asymétriquement réparties sur la périphérie de l'arbre (1) du volant et par plusieurs rainures de couplage (22) adaptées à la configuration des saillies de couplage (12).

5. Dispositif suivant la revendication 4, caractérisé par trois premières saillies de couplage (121, 122, 123) agencées sur une première moitié de périphérie de l'arbre (1) du volant et par une deuxième saillie de couplage (124) agencée sur l'autre moitié de périphérie, la deuxième saillie de couplage (124) étant, en direction radiale, plus large que les premières saillies de couplage (121, 122, 123).

6. Dispositif suivant l'une des revendications précédentes, caractérisé en ce que les flancs avant des saillies de couplage (12) sont biseautés.

7. Dispositif suivant l'une des revendications précédentes, caractérisé en ce que le dispositif d'encliquetage (8 ; 13 à 16 ; 23 à 25) présente plusieurs rainures d'encliquetage (13 à 16) qui sont agencées dans l'arbre (1) du volant, sont disposées à distance l'une de l'autre et s'étendent transversalement à l'axe de l'arbre du volant et des saillies d'encliquetage (8 ; 23 à 25) qui sont agencées dans la douille de colonne de direction (2), sont déplaçables en direction radiale et pénètrent dans les rainures d'encliquetage (13 à 16) en fonction de la position de ressauts d'encliquetage (31, 32) agencés sur la face interne du manchon de commande (3).

8. Dispositif suivant la revendication 7, caractérisé en ce que les saillies d'encliquetage (8 ; 23 à 25) sont constituées de billes (8) agencées dans des trous (23, 24, 25) de la douille de colonne de direction (2).

9. Dispositif suivant la revendication 7, caractérisé en ce que les rainures d'encliquetage (13 à 16) s'étendent sur toute la périphérie de l'arbre (1) du volant et en ce que les saillies d'encliquetage (8 ; 23 à 25) sont agencées de manière répartie sur la totalité de la périphérie de la douille de colonne de direction (2).

10. Dispositif suivant la revendication 9, caractérisé en ce que quatre rainures d'encliquetage (13 à 16) et trois rangées de saillies d'encliquetage (8 ; 23 à 25) sont prévues, les saillies d'encliquetage (8 ; 23 à 25) étant agencées à des distances axiales mutuelles identiques, en ce que les respectivement première et deuxième rainures d'encliquetage (13, 14), dans la direction axiale, ainsi que les respectivement troisième et quatrième rainures d'encliquetage (15, 16) et les ressauts d'encliquetage (31, 32) présentent entre eux la même distance que les saillies d'encliquetage (8 ; 23 à 25) et en ce que les deuxième et troisième rainures d'encliquetage (14, 15) présentent un écart mutuel plus faible.

11. Dispositif suivant l'une des revendications précédentes, caractérisé en ce que le dispositif de retour (4, 5, 6) présente une goupille de retour (41) qui fait saillie à travers une rainure longitudinale (26) de la douille de colonne de direction (2) et qui est en appui sur l'extrémité de l'arbre (1) du volant et un ressort d'engagement (5) qui presse contre l'extrémité de l'arbre (1) du volant.

12. Dispositif suivant la revendication 11, caractérisé en ce que la goupille de retour (41) est fixée dans une douille de retour (4) entourant la douille de colonne de direction (2) et en ce qu'un ressort de rappel (6) réalisé sous la forme d'un ressort de compression et entourant la douille de colonne de direction (2) est agencé entre la douille de retour (4) et l'extrémité de la douille de colonne de direction (2).

13. Dispositif suivant l'une des revendications précédentes, caractérisé en ce que l'extrémité de l'arbre (1) du volant, qui est située à l'intérieur de la douille de colonne de direction (2), est constituée d'un biseau (18) consistant en une espèce de filet à droite avec un filet à gauche ultérieur.

14. Dispositif suivant l'une des revendications précédentes, caractérisé en ce que l'extrémité de l'arbre (1) du volant présente un alésage dans lequel est logé le ressort d'engagement (5) qui est en appui sur l'extrémité de la douille de colonne de direction (2).

15. Dispositif suivant la revendication 14, caractérisé en ce que le ressort d'engagement (5) est pourvu d'une bille à l'extrémité en appui sur le côté frontal de l'alésage (17).

16. Dispositif suivant l'une des revendications précédentes, caractérisé par une première saillie (71) prévue sur la surface externe de la douille de colonne de direction (2) et à son extrémité pour fixer le ressort de rappel (6) et par une deuxième saillie (72) prévue entre le dispositif de retour (4, 5, 6) et le dispositif d'encliquetage (8 ; 13 à 16 ; 23 à 25) pour limiter le déplacement axial du manchon de commande (3).

17. Dispositif suivant la revendication 16, caractérisé en ce que les première et les deuxième saillies (71, 72) sont constituées d'un anneau de retenue qui est chaque fois agencé dans une rainure (28, 29) prévue dans la surface externe de la douille de colonne de direction (2).
